# EUROPEAN PATENT APPLICATION

(11) **EP 2 975 079 A1**
(43) Date of publication of application: **20.01.2016**
(21) Application number: 14764251.6
(22) Date of filing: 25.02.2014
(51) Int. Cl.: C08J 5/18, B29C 55/14, B32B 27/34, B29K 77/00, B29L 7/00, B29L 9/00

(54) **BIAXIALLY ORIENTED POLYAMIDE-BASED RESIN FILM**

(30) Priority: 11.03.2013 JP 2013047961
(71) Applicant: Toyobo Co., Ltd., Osaka-shi Osaka 530-8230 (JP)
(72) Inventor: MIYAGUCHI, Yoshinori, Inuyama-shi Aichi 484-8508 (JP)
(74) Representative: von Kreisler Selting Werner - Partnerschaft von Patentanwälten und Rechtsanwälten mbB
(86) International application number: PCT/JP2014/054487
(87) International publication number: WO 2014/141870

(57) **Abstract**

The present invention aims to provide a biaxially oriented polyamide-based resin film which is excellent in laminate strength, pinhole resistance in low temperature, impact resistance, transparency, and keep good appearance even after being subjected to a hot water sterilization treatment. The present invention is a biaxially oriented polyamide-based resin film comprising a polyamide-based resin together with a polyolefin-based elastomer and/or a polyamide-based elastomer and satisfying the following conditions (1) to (5):
(1) that the number of Gelbo pinhole defects is not more than 5 when a twist and bend testing is carried out at 1°C 1000 times using a Gelbo Flex tester;
(2) that the impact strength is not less than 0.9 J;
(3) that the total transmission haze value is not more than 5.0%;
(4) that the coefficient of static friction at a temperature of 23°C and a relative humidity of 50% is not more than 0.7; and
(5) that the laminate strength of the laminated film obtained by laminating the biaxially oriented polyamide-based resin film and an unstretched polyethylene-based resin film is not less than 5.0 N/15 mm.

## Description

### TECHNICAL FIELD

The present invention relates to a biaxially oriented polyamide-based resin film which is excellent in laminate strength, impact resistance, pinhole resistance (bending fatigue resistance), particularly pinhole resistance in low temperature environments, transparency, and piercing resistance, which is effective for preventing bag breakage at the time of transportation and storage of goods in the case of being used as a packaging material for wrapping foodstuffs or the like, and further effective for preventing bag breakage by dropping of a large and heavy bag for commercial use, and which is suitable for various kinds of packaging uses and designed packaging materials with high design properties taking advantage of the transparency.

### BACKGROUND ART

Conventionally, unstretched films and stretched films made of aliphatic polyamides typified by nylon 6 and nylon 66 have been used widely for various kinds of packaging materials since they are excellent in impact resistance and pinhole resistance.

Further, in the case of filling and packaging of liquids such as soup or condiment, pinhole-resistant stretched polyamide-based films having a monolayer configuration and made more flexible by incorporating various kinds of elastomers in aliphatic polyamides have been used widely to improve pinhole resistance and impact resistance.

Regarding the above-mentioned conventional pinhole-resistant films, films of aliphatic polyamides mixed with polyolefin-based elastomers have good pinhole resistance and impact resistance at normal temperature, but are deteriorated in pinhole resistance and impact resistance under low temperature environments, leading to a problem that pinholes tend to be formed owing to bending fatigue at the time of transportation of goods. If pinholes are formed in packaging materials for goods, the pinholes may cause contamination due to leakage of the contents and may cause putrefaction of the contents and growth of mold, which leads to a decline in commodity value.

To solve the problems as described above, for example, Patent Documents 1 and 2 each describe a film of an aliphatic polyamide mixed with a polyamide-based elastomer. Films described in Patent Documents 1 and 2 are good in pinhole resistance and impact resistance in low temperature environments, and hardly form pinholes due to bending fatigue even in low temperature environments.

However, films described in Patent Documents 1 and 2 have a problem that the laminate strength is low in the case where a polyethylene-based film is dry-laminated to provide heat sealing properties.

Further, since a polyamide elastomer has a large dispersion diameter in aliphatic polyamides, impact at the time of dropping a bag product is successively propagated through polyamide elastomer particles having a large particle size dispersed in a polyamide film to tend to make tearing of the film easy in the thickness direction. Accordingly, a large-sized liquid-filled bag made of a pinhole resistant polyamide film to which a polyamide elastomer is added tends to cause breakage by dropping.

Further, in the case where the thickness of a polyethylene resin layer for providing heat sealing properties is increased for the purpose of providing stiffness to a bag product to improve handling property at the time of producing bags or to improve workability at the time of filling bags with contents, or in the case of a bag product having a structure of a polyamide-based film/polyethylene resin for which a harder polyethylene resin is selected, pinholes are formed easily since the stiffness of the bag product is high. A polyamide-based film used for the above-mentioned uses is therefore required to have higher pinhole resistance.

However, if the content of a polyamide elastomer in a film is increased to improve pinhole resistance, there occurs a problem that the laminate strength is further reduced and transparency is deteriorated.

A demand for large-sized liquid-filled bags for commercial use with a volume of 1 L or more and a demand for a bag-in-box, which is a packaging form for storing, keeping, and transporting large-sized plastic bags in a cardboard box, is growing. Polyamide films used for these purposes are strongly required to have pinhole resistance and impact resistance, and further required to have strong resistance to bag breakage by dropping and high strength against cohesive failure in the thickness direction of the films in order to package a liquid material having a large volume.

Still further, there are many products in the market which have been subjected to a sterilization treatment by being boiled in hot water after the contents are packed in the packaging bags to prolong the quality assurance period. Thus, polyamide films are required to keep adhesive strength in hot water, keep adhesive strength in a water adhesion condition, and cause no appearance deterioration such as whitening in water.

As described above, presently available pinhole resistant polyamide-based films fail to sufficiently satisfy the quality required in the market.

### PRIOR ART DOCUMENTS

### PATENT DOCUMENTS

Patent Document 1: JP-A-2002-179817
Patent Document 2: JP-A-11-322974

### SUMMARY OF THE INVENTION

### PROBLEMS TO BE SOLVED BY THE INVENTION

In consideration of the above-mentioned problems of presently available pinhole resistant polyamide-based films, the present invention aims to provide a biaxially oriented polyamide-based resin film which is excellent in laminate strength, impact resistance, transparency, piercing resistance, and pinhole resistance, particularly in pinhole resistance in low temperature environments, which is effective for preventing bag breakage at the time of transportation and storage of goods in the case of being used as a packaging material for wrapping foodstuffs, and further effective for preventing bag breakage by dropping of a large-sized liquid bag for commercial use or the like, which can keep satisfactory adhesive strength and good appearance even after being subjected to a hot water sterilization treatment, and which is suitable for various kinds of packaging uses, and also to provide a production method thereof.

### SOLUTIONS TO THE PROBLEMS

The present inventors have diligently studied for solving the problems and as a result, have reached the present invention. A film which solves the problems is a biaxially oriented polyamide-based resin film comprising a polyamide-based resin together with a polyolefin-based elastomer and/or a polyamide-based elastomer and satisfying the following conditions (1) to (5):
(1) that the number of Gelbo pinhole defects is not more than 5 when a twist and bend testing is carried out at 1°C 1000 times using a Gelbo Flex tester;
(2) that the impact strength is not less than 0.9 J;
(3) that the total transmission haze value is not more than 5.0%;
(4) that the coefficient of static friction at a temperature of 23°C and a relative humidity of 50% is not more than 0.7; and
(5) that the laminate strength of the laminated film obtained by laminating the biaxially oriented polyamide-based resin film and an unstretched polyethylene-based resin film is not less than 5.0 N/15 mm.

As the configuration of the biaxially oriented polyamide-based resin film, the maximum dispersion particle diameter of the polyolefin-based elastomer and/or the polyamide-based elastomer is 0.7 to 2 µm.

The biaxially oriented polyamide-based resin film preferably contains 0.05 to 0.30% by mass of ethylene bis(stearic acid amide) and 0.3 to 0.8% by mass of porous agglomerated silica having a fine pore volume of 0.8 to 1.8 ml/g and an average particle size of 2.0 to 7.0 µm.

In the biaxially oriented polyamide-based resin film, the biaxially oriented polyamide-based resin film and an unstretched polyolefin-based resin film are laminated to each other and cause no whitening by a hot water treatment.

Further, the biaxially oriented polyamide-based resin film preferably has a monolayer structure or a co-extruded laminated structure having two or more layers.

The production process according to the present invention is characterized by involving carrying out two-stage stretching of a polyamide-based resin sheet cooled and solidified by an electrostatic adhesion method in the longitudinal direction, successively carrying out different temperature stretching in the transverse direction in a manner that the stretching finishing temperature is higher than the stretching starting temperature, next carrying out a heat fixation treatment, and further carrying out re-relaxing treatment at a temperature less than the initial relaxing temperature.

### EFFECTS OF THE INVENTION

In the present invention, since the biaxially oriented polyamide-based resin film has excellent resistance to bag breakage by dropping owing to excellent flexibility, pinhole resistance, and high laminate strength, is highly transparent, and is also excellent in slipping properties, the film has good workability in the printing processing, bag-producing processing, or the like.

Further, the biaxially oriented polyamide-based resin film is suitable for large-sized bags for liquids since it has high laminate strength and accordingly exhibits excellent resistance to bag breakage by dropping and water-proof adhesive properties.

Still further, since the biaxially oriented polyamide-based resin film has high transparency, the film can be used suitably for a wide range of packaging uses while satisfying packaging with high design properties which requires transparency.

### MODE FOR CARRYING OUT THE INVENTION

Hereinafter, embodiments of a biaxially oriented polyamide-based resin film of the present invention will be described in detail.

The present invention is a biaxially oriented polyamide-based resin film comprising a polyamide-based resin together with a polyolefin-based elastomer and/or a polyamide-based elastomer and satisfying the following conditions (1) to (5):
(1) that the number of Gelbo pinhole defects is not more than 5 when a twist and bend testing is carried out at 1°C 1000 times using a Gelbo Flex tester;
(2) that the impact strength is not less than 0.9 J;
(3) that the total transmission haze value is not more than 5.0%;
(4) that the coefficient of static friction at a temperature of 23°C and a relative humidity of 50% is not more than 0.7; and
(5) that the laminate strength of the laminated film obtained by laminating the biaxially oriented polyamide-based resin film and an unstretched polyethylene-based resin film is not less than 5.0 N/15 mm.

As satisfactory resistance to bag breakage by bending in the case where a bag product made using the biaxially oriented polyamide-based resin film according to the present invention is stored at low temperature, it is required that the number of defects generated when a Gelbo Flex pinhole test is carried out at 1°C 1000 times is not more than 5, more preferably not more than 4, furthermore preferably not more than 3, particularly preferably not more than 2, and most preferably not more than 1. The number of pinhole defects of a biaxially oriented film made solely of nylon 6 is usually in the range of 6 to 10, and the biaxially oriented polyamide-based resin film according to the present invention is required to have physical properties better than that.

To make the biaxially oriented polyamide-based resin film according to the present invention stand bag breakage due to a projected matter at the time of dropping, the impact strength is preferably not less than 0.9 J, more preferably not less than 1.0 J, and furthermore preferably not less than 1.1 J. If the impact strength is less than 0.9 J, the biaxially oriented polyamide-based resin film cannot stand bag breakage by a projected matter at the time of dropping, and therefore, it is not preferable.

Further, the coefficient of static friction of the biaxially oriented polyamide-based resin film according to the present invention at a temperature of 23°C and a relative humidity of 50% is preferably not more than 0.7, more preferably not more than 0.6, and furthermore preferably not more than 0.5.

In the case where the biaxially oriented polyamide-based resin film according to the present invention is applied as a bag product by printing and processing, it is preferable to effectively exhibit decorative properties and design properties. For this purpose, high transparency is required, and the total transmission haze value is preferably not more than 5.0%, more preferably not more than 4.5%, and furthermore preferably not more than 4.0%. If the total transmission haze value exceeds 5.0%, it is sometimes difficult to keep high transparency, and the decorative properties and design properties may possibly be deteriorated.

To distribute a bag product made by using the biaxially oriented polyamide-based resin film according to the present invention in the form of a large-sized bag filled with liquids, high resistance to bag breakage by dropping is required, and laminate strength can be mentioned as a physical property to determine the resistance to bag breakage by dropping. In the present invention, the biaxially oriented polyamide-based resin film according to the present invention and an unstretched polyethylene-based resin film are laminated to each other by using an adhesive, and thereafter the biaxially oriented polyamide-based resin film and the unstretched polyethylene-based resin film are separated at the adhesion interface in 90° direction to measure the stress. The thickness of the laminate film after the lamination is preferably 40 to 50 µm, and further preferably 35 to 45 µm.

In order to use the laminate film as a large-sized bag filled with liquids, the laminate strength of the laminate film is preferably not less than 5.0 N/15 mm, more preferably not less than 6.0 N/15 mm, and furthermore preferably not less than 7.0 N/15 mm since sufficiently high resistance to bag breakage by dropping can be realized. If the laminate strength is less than 5.0 N/15 mm, it is sometimes impossible to obtain sufficient resistance to bag breakage by dropping at the time of use as a large-sized bag filled with liquids, and therefore, it is not preferable.

The biaxially oriented polyamide-based resin film according to the present invention is a remarkably excellent film having all of the above-mentioned properties.

Further, in the case where the polyamide-based resin film of the present invention is used as a liquid-filled bag, the polyamide-based resin film is sometimes subjected to a boiling sterilization treatment in hot water or a pressurized hot water sterilization treatment by a retort machine (hereinafter also referred to as hot water treatment) for assuring safety of the contained foodstuffs. In such a case, it is required that no film whitening by the hot water treatment or no pearl-like whitening in water occurs for keeping the external appearance good.

A polyamide resin which can satisfy the above-mentioned group of required properties is not particularly limited, and those usable include polyamide resins such as nylon 6, nylon 7, nylon 11, nylon 12, nylon 66, nylon 6T, nylon MXD6 (polymetaxylylene adipamide), nylon 61, and nylon 46, and their copolymers, blended resins, and alloys. Among these resins, nylon 6, nylon 6T, nylon 6I, nylon MXD6, and their blended resins are preferably used.

The content of an oligomer in the polyamide resin is preferably not more than 1% by mass. If the oligomer content exceeds 1% by mass, the oligomer sometimes tends to adhere to a cooling roll in a process of winding a melted polyamide-based resin mixture extruded out of a die on a cooling roll and solidifying the resin mixture in a sheet-like form.

In the case where nylon 6 is used as the polyamide resin, the relative viscosity of nylon 6 is preferably 2.5 to 3.6.

If the relative viscosity is less than 2.5, the impact strength of the film after biaxial stretching is reduced. On the other hand, if the relative viscosity exceeds 3.6, both end parts of the film may sometimes be whitened or broken at the time of transverse stretching.

In the present invention, the content of a polyolefin-based elastomer and/or a polyamide-based elastomer contained in the film is preferably 1 to 5% by mass, more preferably 1.5 to 4.5% by mass, and furthermore preferably 2 to 4% by mass.

If the content is less than 1% by mass, although laminate strength of the film is excellent, pinhole resistance may not be exhibited. On the other hand, if the content exceeds 5% by mass, although pinhole resistance of the film is excellent, laminate strength and impact strength are lowered, and stiffness of the film tends to be weakened. Consequently, a bag product made using the biaxially oriented polyamide-based resin film is deteriorated in resistance to bag breakage by dropping and rigidity, so that the bag tends to be broken easily. Further, if the content exceeds 5% by mass, since the transparency of the film tends to be deteriorated, the film may not be used for a packaging material with high design properties taking advantage of the transparency.

In the biaxially oriented polyamide-based resin film according to the present invention, the configuration of a polyolefin-based elastomer and/or a polyamide-based elastomer used is not particularly limited, but the dispersion particle size of the polyolefin-based elastomer and/or the polyamide-based elastomer in a stage of having been formed into an unstretched sheet by film formation is preferably 0.7 µm to 2 µm, more preferably 0.8 to 1.9 µm, and furthermore preferably 1.0 to 1.8 µm.

In the biaxially oriented polyamide-based resin film, if the maximum dispersion particle diameter of the elastomer is larger than 2 µm, impact at the time of dropping a bag product is successively propagated through elastomer particles dispersed in a polyamide film to make cohesive failure easily. Therefore, tearing occurs easily in the thickness direction to lower the resistance to bag breakage by dropping. Further, due to the large dispersion particle size, the transparency of the film is deteriorated, and external appearance of a bag product is deteriorated, and therefore, it is not preferable.

On the other hand, if the maximum dispersion particle diameter of the elastomer is smaller than 0.7 µm, since the impact at the time of dropping a bag product is hardly propagated, cohesive failure is hardly caused and tearing is hardly caused in the thickness direction, and thus the resistance to bag breakage by dropping is improved. However, when the bag is bent in a low temperature condition, sufficient cushion properties are not exhibited since the dispersion particle diameter is small, and therefore, bag breakage occurs easily at low temperature, and it becomes impossible to obtain required pinhole resistance. Further, pinhole resistance can be provided by addition in a large amount of the elastomer, but the raw material cost is increased, and the biaxially oriented polyamide-based resin film may be a packaging material unsuitable for uses as packaging for foodstuffs. Further, addition in a large amount of the elastomer lowers the impact strength and makes it impossible to obtain required physical properties as a liquid-filled heavy bag package.

Consequently, for usability as a liquid-filled heavy bag package, it is necessary to simultaneously satisfy excellent impact strength, resistance to bag breakage by dropping owing to scarce occurrence of cohesive failure, and excellent pinhole resistance in low temperature bending so that no pinhole is formed even by severe bending at the time of low temperature storage and distribution. For this purpose, the maximum dispersion particle diameter of the elastomer added to the polyamide-based resin is preferably in the range of 0.7 to 2 µm.

The elastomer usable for the present invention is not particularly limited, and a polyolefin-based elastomer and/or a polyamide-based elastomer is preferable. To keep the dispersion particle diameter within the above-mentioned range by using these elastomers, it is necessary to improve the adhesive properties in the interface between the polyamide resin layer and the elastomer particles by improving the compatibility with the polyamide resin layer.

The polyamide-based elastomer used in the present invention is preferably a polyamide-based block copolymer. The polyamide-based block copolymer is a substance having rubbery elasticity, and preferably has a hard part comprising a residue of a cyclic lactam having 4 to 10 carbon atoms and a soft part comprising a residue of a polyoxypropylene glycol or a polyoxytetramethylene glycol having a number average molecular weight of 500 to 3000. Further, in the polyamide-based block copolymer, a compound having a reactive group for bonding the hard part with the soft part is preferably introduced in the same molar amount as that of the polyoxyalkylene glycol composing the soft part.

Compounds having an isocyanate group, an epoxy group, a carboxylic acid group, or the like may be used as the compound having the reactive group. In terms of productivity in the polymerization process of the polyamide-based block copolymer, it is preferable to use aliphatic dicarboxylic acids such as succinic acid, glutaric acid, and adipic acid, aromatic dicarboxylic acids such as terephthalic acid, isophthalic acid, and orthophthalic acid, or anhydrides thereof, and it is more preferable to use aliphatic dicarboxylic acids.

If the hard part is a residue of a cyclic lactam having less than 4 carbon atoms, for example, a β-propiolactam residue, pinhole resistance of the film tends to be lowered. If the hard part is a residue of a cyclic lactam having more than 10 carbon atoms, for example, an ω-laurinlactam residue, since the dispersion particle size of the polyamide-based block copolymer is large, the dropping impact may be propagated in the film layer, and the impact may be propagated through respective dispersion particles to cause cohesive failure in the nylon film layer. Accordingly, a film made from a block copolymer having a hard part of a residue of ω-laurinlactam sometimes fails to simultaneously satisfy high laminate strength and resistance to bag breakage by dropping which are necessary as a heavy bag for liquids although the film exhibits excellent flexibility and pinhole resistance. Consequently, the film is suitable for a small-sized bag such as a small bag for soup, but is unsuitable for a large-sized bag for liquids for commercial uses, a bag-in-box wrapping, or the like.

In the case where the polyamide resin is nylon 6, it is preferable to use ε-caprolactam having an analogous structure for the hard part of the polyamide-based block copolymer.

If the hard part is a residue of ε-caprolactam, the adhesive properties in the interface between nylon 6 and the block copolymer, which are main resins composing the film, are improved, so that breakage in the interface is hard to occur even if high impact is propagated. Further, the dispersion particle size of the polyamide-based block copolymer takes the above-mentioned preferable value owing to that compatibility between nylon 6 and the block copolymer is improved, and therefore, breakage in the interface between the film layers is hardly propagated through each dispersion particles of the polyamide-based block copolymer. Accordingly, the film is provided with high laminate strength and high resistance to bag breakage by dropping.

If the dispersion particle size of the polyamide-based block copolymer is too small, the rubber elasticity is hardly exhibited, and therefore a large quantity of the polyamide-based block copolymer is required to obtain flexibility and pinhole resistance needed as a packaging bag for liquids.

To simultaneously satisfy excellent laminate strength, resistance to bag breakage by dropping, flexibility, and pinhole resistance, it is important to first improve the compatibility with a polyamide resin serving as a film base and accordingly improve the adhesive force in the interface between the polyamide resin and the polyamide-based block copolymer, and then, to improve the exhibition of rubber elasticity of the polyamide-based block copolymer, it is important to keep the dispersion particle size in the above-mentioned preferable range.

On the other hand, if the soft part comprises a residue of polyoxyethylene glycol, when the biaxially oriented polyamide-based resin film is subjected to a boiling treatment or immersed in water, the film is whitened in pearl-like tone. Further, if the soft part comprises a residue of polyoxyhexamethylene glycol, since a strand of the polyamide-based block copolymer extruded out of a polymerization can is so soft that cutting failure is caused, and consequently, chips having a length longer than 5 cm or several to more than a dozen bonded chips that are incompletely cut away, that is, chips in irregular forms, are often produced, and thus the productivity of the polymerization process is lowered.

The number average molecular weight of the polyoxypropylene glycol or the polyoxytetramethylene glycol is preferably 500 to 3000, more preferably 850 to 2800, furthermore preferably 1000 to 2500, and most preferably 1300 to 2300.

If the number average molecular weight is less than 500, the pinhole resistance of the film may be scarcely improved. On the other hand, if the number average molecular weight exceeds 3000, not only the laminate strength of the film may be lowered but also the transparency of the film may be deteriorated. As a result, the biaxially oriented polyamide-based resin film may possibly not be used for a large bag for liquids for commercial use, a bag-in-box, a packaging material with high design properties taking advantage of the transparency, or the like.

In the polymerization process, to produce chips by cutting a strand of the polyamide-based block copolymer, a strand cutting method, a cutting-in-water method, a dicer cutting method, or the like can be employed. The cutting-in-water method is preferable among these methods in terms of suppression of production of chips in irregular forms in the polymerization process and suppression of raw material segregation in the film production process.

The polyolefin-based elastomer used for the present invention is preferably a polyolefin-based copolymer having good compatibility with a polyamide resin, and those usable include an acid-modified polyolefin-based resin obtained by modifying a polyolefin-based resin with an acid and a polyolefin-based ionomer resin obtained by introducing metal ions. Particularly, polyolefin-based ionomer resins are more preferable because of better compatibility with a polyamide resin as compared with acid-modified polyolefin-based resins. This is because the compatibility with the terminal groups of a polyamide resin is improved by metal ion bonding.

The polyolefin-based ionomer resin is preferably a resin obtained by partially neutralizing carboxylic acid parts of a resin of a copolymer composed of a linear saturated hydrocarbon and an unsaturated carboxylic acid with metal ions.

The linear saturated hydrocarbon is not particularly limited and, for example, may be ethylene, propylene, or butene. Ethylene is most preferable among them. The unsaturated carboxylic acid is not particularly limited and, for example, may be acrylic acid, methacrylic acid, fumaric acid, maleic anhydride, or monomethyl maleate. Particularly, acrylic acid or methacrylic acid is most preferable. The polyolefin-based ionomer resin may be one which is copolymerized with a different monomer. The different monomer is not particularly limited, and examples thereof include unsaturated carboxylic acid esters such as methyl acrylate, ethyl acrylate, n-butyl acrylate, isobutyl acrylate, 2-ethylhexyl acrylate, methyl methacrylate, isobutyl methacrylate, and diethyl maleate; vinyl esters such as vinyl acetate; carbon monoxide, or the like.

The polyolefin-based ionomer resin contains an unsaturated carboxylic acid in a content of 5 to 15% by mole, preferably 6 to 12% by mole, and more preferably 7 to 10% by mole, and the different monomer, which is an optional component, in a content ranging from 0 to 15% by mole, and preferably from 0 to 10% by mole. In the case where the unsaturated carboxylic acid content is less than the above-mentioned range, it is sometimes impossible to obtain a polyamide resin excellent in transparency. Further, in the case where the unsaturated carboxylic acid content is large, resin production is difficult, and a resin to be obtained may be fragile.

An ionomer of the polyolefin-based ionomer resin may be monovalent or divalent cations, and metal ions of alkali metals such as sodium and potassium, alkaline earth metals such as magnesium and calcium, zinc, and so forth can be used. Especially, those whose ion source is sodium, zinc, or potassium are preferable, and particularly those whose ion source is sodium are preferable for reliably keeping transparency of the polyamide-based resin film. In the case where sodium is used, it is preferable that the sodium ion content is in the range of 0.2 to 1.5 moles per 1 kg of a polyolefin-based copolymer resin for simultaneously satisfying transparency, resistance to bag breakage by dropping owing to cohesive failure prevention, and pinhole resistance in low temperature bending. In the case where the sodium content is less than the above-mentioned range, the compatibility is lowered and the dispersion particle diameter in the polyamide resin is large, and transparency and resistance to bag breakage by dropping owing to cohesive failure prevention are deteriorated, resulting in unsuitability for uses for a liquid-filled heavy bag package.

The polyolefin-based ionomer resin used in the present invention preferably has a melt flow rate in the range of 0.5 to 5 g at 190°C and a load of 2160 g to keep the dispersion particle diameter in a preferable range and thereby to reliably provide qualities indispensable for packaging uses for filling liquids.

In the present invention, various kinds of additives such as a lubricant, a blocking prevention agent, a heat stabilizer, an antioxidant, an antistatic agent, a lightfast agent, and an impact resistance improver may be added to the film to an extent that the characteristics of the film are not hindered. Particularly, when 0.05 to 0.30% by mass of an organic lubricant such as ethylene bis(stearic acid amide) is added to the film, slipping properties of the film become further excellent.

If the content of ethylene bis(stearic acid amide) in the film is less than 0.05% by mass, the addition sometimes fails to contribute to improvement in the slipping properties. On the other hand, if the content exceeds 0.30% by mass, since ethylene bis(stearic acid amide) bleeds out to the film surface beyond necessity, the transparency of the film and the adhesive properties of the film surface are sometimes deteriorated.

Further, in order to improve the slipping properties, it is preferable to add inorganic fine particles with a prescribed fine pore volume to the film. Those usable as the inorganic fine particles are silica, titanium dioxide, talc, kaolinite, calcium carbonate, calcium phosphate, barium sulfate, or the like. Particularly, porous agglomerated silica is easy to control the fine pore volume and is suitable for keeping good transparency even if being added in an amount proper for providing good slipping properties to the film.

Further, the fine pore volume of the porous agglomerated silica is preferably 1.0 to 1.8 ml/g, and further preferably 1.2 to 1.7 ml/g.

If the fine pore volume exceeds 1.8 ml/g, when an unstretched film is stretched, the porous agglomerated silica is deformed, so that the height of the surface projections is reduced, and the slipping properties of the film are deteriorated. On the other hand, if the fine pore volume is less than 1.0 ml/g, when an unstretched film is stretched, voids are excessively formed around the porous agglomerated silica, so that the transparency of the film is deteriorated.

Still further, the average particle size of the porous agglomerated silica is preferably 2.0 to 7.0 µm, and further preferably 3.5 to 7.0 µm.

If the average particle size is less than 2.0 µm, since surface projections are hardly formed at the time of stretching, it is sometimes impossible to obtain sufficient slipping properties. On the other hand, if the average particle size exceeds 7.0 µm, the surface projections are so large that light is scattered on the film surface, and thus the transparency is sometimes deteriorated. Further, the porous agglomerated silica becomes easy to drop because of contact with a transportation roll used in the film production process or processing process.

Still further, the content of the porous agglomerated silica in the film is preferably 0.3 to 0.8% by mass, and further preferably 0.4 to 0.7% by mass. If the content is less than 0.3% by mass, the surface projections are insufficient, and slipping properties of the film under high humidity are deteriorated. On the other hand, if the content exceeds 0.8% by mass, the transparency of the film is deteriorated.

In the present invention, a polyamide-based resin mixture is supplied to an extruder, extruded out of a T die at a temperature of 240 to 290°C, and cooled and solidified by a cooling roll at 20 to 50°C to give an unstretched sheet.

For the purpose of improving the flatness of an unstretched sheet, it is preferable to employ an electrostatic adhesion method or a liquid coating adhesion method in order to improve the adhesive properties between the sheet and the cooling roll.

In the case where an electrostatic adhesion method is employed, in order to lessen the thickness unevenness after stretching by making the crystallization degree of the sheet uniform, it is preferable to closely attach the sheet to a cooling roll by applying a high DC voltage of 2 to 30 kV to electrodes, and thereby generating streamer corona electric discharge. It is preferable to use, as the electrodes, those which have projections in a needle-like or saw-toothed form and capable of generating a lot of corona discharge, that is, those which have projections and having a specific resistance not more than 5 µΩ·cm, and it is preferable that the curvature radius of the tip ends of the projections is 0.01 to 0.07 mm.

If the applied voltage is less than 2 kV, glow discharge is generated, and if it exceeds 30 kV, spark discharge is generated, resulting in impossibility of stably generating streamer corona discharge.

Further, if the curvature radius is less than 0.01 mm, the tip end parts tend to be damaged easily at the time of handling the electrodes, and it results in generation of abnormal discharge attributed to the damage. On the other hand, if the curvature radius is more than 0.07 mm, the applied voltage must be increased, and thus spark discharge tends to be generated.

In the present invention, the polyamide-based resin film is produced by monoaxially or biaxially stretching an unstretched film which is obtained by melting and extruding a mixture containing a polyamide resin and a polyolefin elastomer or a polyamide-based block copolymer. Specifically, it is preferable to employ a successive biaxial stretching method involving stretching the unstretched sheet melt-extruded out of a T die longitudinally and transversely in this order, or transversely and longitudinally in this order.

In the case of stretching the film longitudinally and transversely in this order, if a longitudinal-longitudinal two stage stretching manner by a roll type stretching machine is employed, a biaxially oriented polyamide-based resin film with reduced bowing and a small difference of physical property in the width direction can be obtained.

In the longitudinal-longitudinal two stage stretching manner, it is preferable to carry out stretching 1.3 to 2.0 times at a temperature of 80 to 90°C, and thereafter, without cooling the resultant to a temperature equal to or lower than Tg, successively stretching the resultant 1.6 to 2.4 times at a temperature of 65 to 75°C. The total stretch ratio defined by the product of the stretch ratio by the first stage and the stretch ratio by the second stage is preferably 2.8 to 4.0 times. In addition, as a sheet heating method, a heat roll method and an infrared radiation method may be employed.

If the stretch ratio by the first stage is less than 1.3 times or the stretch ratio by the second stage is less than 1.6 times, the strain tends to be significant when the film is boiled. On the other hand, if the stretch ratio by the first stage exceeds 2.0 times, the thickness unevenness in the longitudinal direction tends to be significant, and if the stretch ratio by the second stage exceeds 2.4 times, breakage tends to occur in the transverse stretching step. Further, if the total stretch ratio is less than 2.8 times, the thickness unevenness in the longitudinal direction tends to be significant, and if the total stretch ratio exceeds 4.0 times, breakage tends to occur in the transverse stretching step.

In the present invention, the transverse stretching carried out successively to the longitudinal stretching by a tenter type stretching machine is preferably performed in a temperature differential stretching manner in which the temperature in a stretching starting zone is controlled to be the lowest stretching temperature, the temperature in latter zones is sequentially increased, and the temperature in the stretching finishing zone is controlled to be the highest temperature. If the temperature differential stretching manner is employed, a biaxially oriented polyamide-based resin film with reduced bowing and a small difference of physical property in the width direction can be obtained, and the strain of the film is suppressed when the film is boiled.

In the temperature differential stretching manner, transverse stretching 2.8 to 4.5 times is carried out at a temperature of 110 to 170°C, preferably 120 to 160°C, and it is preferable to carry out stretching in two or more different temperature zones, and preferably three or more different temperature zones.

If the stretch ratio is less than 2.8 times, the thickness unevenness in the transverse direction tends to be significant. On the other hand, if the stretch ratio exceeds 4.5 times, heat shrinkage ratio in the transverse direction becomes large, and both end parts of the film may sometimes be whitened or broken.

If the highest stretching temperature is less than 110°C, the strain tends to be significant when the film is boiled. If the highest stretching temperature exceeds 170°C, the thickness unevenness in the transverse direction tends to be significant.

In the present invention, the heat fixation treatment after biaxial stretching is preferably carried out at a temperature of 180 to 220°C, and further preferably carried out at a temperature of 205 to 215°C by gradually increasing the temperature from a temperature close to the stretching finishing temperature.

If the highest temperature for the heat fixation treatment is less than 180°C, not only the heat shrinkage ratio of the film becomes large but also the laminate strength is lowered. On the other hand, if the highest temperature for the heat fixation treatment exceeds 220°C, the impact strength of the film is reduced. That is, it is important to set the highest temperature for the heat fixation treatment in a manner of satisfying both of the laminate strength and the impact strength of the film.

In the present invention, it is preferable to carry out a relaxing treatment in the transverse direction by 2 to 10% after the heat fixation treatment.

If the relaxing ratio is less than 2%, the heat shrinkage ratio of the film tends to be high. On the other hand, if the relaxing ratio exceeds 10%, the film is brought into contact with a hot air blowing outlet, and thus the film tends to be scratched and at the same time, bowing is increased and the physical property difference in the width direction of the film tends to be significant.

Further, in order to lessen the heat shrinkage ratio in the transverse direction without increasing the physical property difference of the film in the width direction due to bowing, it is preferable to once carry out the relaxing treatment at a temperature close to the highest temperature for the heat fixation treatment, and thereafter carry out a re-relaxing treatment at a temperature less than the temperature for the relaxing treatment by 20 to 30°C. The relaxing ratio in this case is defined as the sum of the first relaxing ratio and the re-relaxing ratio.

If the relaxing treatment in the longitudinal direction is carried out between a tenter type stretching machine and a film winder, bowing is reduced and the physical property difference of the film in the width direction is further reduced.

In the present invention, the biaxially oriented polyamide-based resin film may be produced by the so-called co-extrusion method. A laminating method employing a co-extrusion method may be laminating-in-die using a multi-manifold die or laminating-out-of-die using a feed block.

Further, a coating liquid of a resin having easy slipping properties, easy adhesive properties, gas barrier properties, or the like may be applied to a region between the roll type stretching machine and the tenter type stretching machine to provide various kinds of functions to the film.

Still further, the film may be subjected to a humidity conditioning treatment to improve the dimensional stability. In addition, the film surface may be subjected to a corona treatment, a plasma treatment, a flame treatment, or the like to improve the adhesive properties of the film with a printing ink, a vapor deposition metal, a vapor deposition metal oxide, or an adhesive used for lamination.

Even if the following recycled raw materials are added in an amount of about 50% by mass to the film, there is no problem such as colorization or generation of foreign matters. The recycled materials are obtained by grinding both end parts of the film cut off at the time of winding the film with a winder and parts which is generated at the time of cutting the film into the product roll with a slitter and not included in the product roll, and thereafter melting or pressurizing and compacting these parts.

In the present invention, the laminate strength is not less than 5.0 N/15 mm in the case where the biaxially oriented polyamide-based resin film and an unstretched low density polyethylene film are stuck to each other with an adhesive, and the number of defects is not more than 5 in Gelbo Flex test at 1°C. Therefore, the obtained laminate film can be used not only for small bags for soup or the like but also for pickles bags, bags for liquids for low temperature distribution, and large-sized bags for liquids for commercial uses.

Further, since the impact strength is not less than 0.9 J in the case of a configuration having a thickness of 15 µm, holes are hardly formed in bags for liquids even if a corner part of the seal part of the bag or a projected matter other than the bag is stuck to the bag when the bags are transported or dropped in low temperature environments.

Still further, since the coefficient of static friction is not more than 0.7 at a temperature of 23°C and a relative humidity of 50%, the bag production processability is good. Moreover, since the total transmission haze value is not more than 5.0%, the film is suitably used for a packaging material with high design properties taking advantage of the transparency.

### EXAMPLES

Next, the present invention will be described further in detail with reference to examples, but the present invention should not be limited to the following examples. Film evaluation was carried out by the following measurement methods.

### (1) Measurement of elastomer dispersion particle diameter in unstretched sheet

Polyamide-based resin sheets (polyamide-based resin compositions used in examples and comparative examples) obtained by melting and kneading a polyamide resin and an olefin-based elastomer and/or a polyamide-based elastomer by an extruder and thereafter quenching the kneaded mixture by a cooling roll were embedded in an epoxy resin and cured, and the obtained materials were incised by a cryo-microtome to produce ultrathin specimens. Each of the specimens was dyed with ruthenium tetroxide and thereafter kept at room temperature for 10 minutes. Then, carbon vapor deposition was carried out thereon, and the specimen was observed with a transmission electron microscope. The average dispersion diameter of the olefin-based elastomer and/or the polyamide-based elastomer was measured using an image analysis apparatus (V10, manufactured by TOYOBO CO., LTD.) on the basis of weighted average of the minor axis and the major axis (n = 3).

### (2) Impact strength

Using a film impact tester manufactured by Toyo Seiki Seisaku-sho, Ltd., measurement was carried out 10 times in an environment of a temperature of 23°C and a relative humidity of 65%, and the average value was used for the evaluation.

### (3) Pinhole resistance

Using a Gelbo Flex tester BE 1006 equipped with a thermostat bath manufactured by TESTER SANGYO CO,. LTD., the number of pinholes was measured by the following method.

After polyester-based adhesives [a mixture of TM-590 (product name) and CAT-56 (product name) manufactured by Toyo-Morton Ltd. mixed at a ratio of 6.25/1, (solid content concentration 23%)] were applied to a film in a manner that the resin solid content after drying became 3 g/m², a 40 µm-thick linear low density polyethylene film (L-LDPE film: manufactured by TOYOBO CO., LTD.; LIX (registered trade mark) L4102) was dry-laminated, and the obtained laminate was aged in an environment of 40°C for 3 days to give a laminate film.

The obtained laminate film was cut in a size of 12 inches × 8 inches and formed into a cylinder having a diameter of 3.5 inches, and one end of the cylindrical film was fixed to a fixed head side of the Gelbo Flex tester and the other end was fixed to a movable head side thereof, and the initial holding interval was set to 7 inches.

The laminate film was subjected to bending fatigue involving torsion at 440 degrees by the initial 3.5-inch stroke and the subsequent straight lateral movement by the remaining 2.5-inch stroke to complete all the strokes, and this bending fatigue was carried out at a speed of 40 cycles/min 1000 times. The number of pinholes generated in the laminate film was counted. The measurement was performed in an environment of 1°C. The above-mentioned measurement was carried out 3 times and the average value was employed for the evaluation.

### (4) Haze

Using a direct reading type haze meter No. 206 manufactured by Toyo Seiki Seisaku-sho, Ltd., measurement was carried out in accordance with JIS-K-7105.

Calculation was performed based on the following: Haze (%) = [Td (diffuse transmittance%)/Tt (total light transmittance%)] × 100.

### (5) Coefficient of static friction

The coefficient of static friction was measured in an environment of a temperature of 23°C and a relative humidity of 50% RH in accordance with JIS-K-7125 by joining surfaces which were not brought into contact with a cooling roll in the extrusion process.

### (6) Laminate strength

The laminate strength was measured to grasp the strength against cohesive failure of the film in the thickness direction.

The laminate film described in the explanation of the pinhole resistance evaluation was cut into a strip form in a size of 15 mm width × 100 mm length, and one end of the laminate film was separated at the interface between the biaxially oriented polyamide-based resin film and the linear low density polyethylene film. Using Tensilon model UMT II-500, manufactured by Toyo Baldwin Ltd., the laminate strength was measured 5 times under conditions of a temperature of 23°C, a relative humidity of 65%RH, a pulling speed of 200 mm/min, and a separating angle of 90°, and the average value was used for the evaluation.

### (7) Whitening after boiling (hot water treatment)

A four-side sealed bag was produced by cutting two films each in a size of 12 cm × 12 cm (sealing width in each side: 1 cm) from the laminate film described in the explanation for the pinhole resistance evaluation, sealing three sides thereof, filling the resulting sealed films with 100 ml of water, and further sealing the remaining side. After boiled under the conditions of 95°C × 30 min, the sealed bag was immersed in cold water and the film appearance was observed.

### [Polyamide-based resin]

Chips A were nylon 6 [GLAMIDE (registered trade mark) T-810, manufactured by TOYOBO CO., LTD.] obtained by ring-opening polymerization of ε-caprolactam using a batch type polymerization can, and had a relative viscosity of 2.8 when measured at 20°C (in the case of use in the form of a 96% concentrated sulfuric acid solution). The glass transition temperature Tg, low temperature crystallization temperature Tc, and melting point Tm (measured by melting, quenching, and crushing the chips and subjecting the obtained sample to the measurement by a differential scanning calorimeter at a heating rate of 10°C/min) were 40°C, 68°C, and 225°C, respectively.

Chips B were produced by melting and kneading 95.0% by mass of the chips A and 5.0% by mass of ethylene bis(stearic acid amide) [Light Amide WE-183 (product name), manufactured by KYOEISHA CHEMICAL CO., LTD.] by a biaxial bent type extruder, and thereafter cutting the kneaded mixture by a strand cutting method.

Chips C were produced by melting and kneading 95.0% by mass of the chips A and 5.0% by mass of porous agglomerated silica [Sylysia 350 (product name), manufactured by FUJI SILYSIA CHEMICAL, LTD., fine pore volume 1.6 ml/g, and average particle size 3.9 µm], and thereafter cutting the kneaded mixture by a strand cutting method.

The characteristics of the chips A to C are shown in Table 1.

**[Table 1]**

| | Base material | | Additive | |
|---|---|---|---|---|
| | Kind | Relative viscosity | Kind | Additive amount (% by weight) |
| Chip A | Ny6 | 2.9 | - | - |
| Chip B | Ny6 | 2.9 | Light Amide WE-183 | 5.0 |
| Chip C | Ny6 | 2.9 | Sylysia 350 | 5.0 |

### [Polyamide-based elastomer (polyamide-based block copolymer)]

The elastomers (PAE 1 to 7) were polymerized according to the polyamide-based block copolymer compositions shown in Table 2. A 70-L pressure container equipped with a stirrer, a thermometer, a torque meter, a pressure meter, a nitrogen gas introduction port, a pressure adjustment apparatus, and a polymer takeout port was filled with ε-caprolactam, γ-butyrolactone, or ω-lauryl lactam as the hard part; adipic acid [Adipic acid (product name) manufactured by Ube Industries, Ltd.] as a bonding part in the same molar amount as that of the following polyoxyalkylene glycol; and a polyoxytetramethylene glycol, a polyoxypropylene glycol, or a polyoxyethylene glycol as the soft part, and after the container was sufficiently purged with nitrogen, the contents were gradually heated while a nitrogen gas was supplied at a flow rate of 300 L/min. The temperature was increased from room temperature to 230°C over 3 hours, and polymerization was carried out at 230°C for 6 hours. The pressure in the container was adjusted to 0.05 MPa from starting of the heating.

**[Table 2]**

| Polyamide-based elastomer | Hard part | Soft part | Number average molecular weight of soft part | Hard part/Soft part (part by mass) |
|---|---|---|---|---|
| PAE-1 | ε-caprolactam caprolactam manufactured by Sumitomo Chemical Co., Ltd. | holyoxytetramethylene glycol Poly THF2000S (product name) manufactured by BASF Japan Ltd. | 2000 | 37/63 |
| PATE-2 | ε-caprolactam | polyoxytetramethylene glycol PTMG1500 (product name) manufactured by Mitsubishi Chemical Corporation | 1500 | 37/63 |
| PAE-3 | ε-caprolactam | polyoxytetramethylene glycol Poly THF1000S (product name) manufactured by BASF Japan Ltd. | 1000 | 28/72 |
| PATE-4 | ε-caprolactam | polyoxypropylene glycol SanixPP1000 (product name) manufactured by Sanvo Chemical Industries. Ltd. | 1000 | 37/63 |
| PAE-5 | γ-butyrolactone gamma butyrolactone (product name) manufactured by Mitsubishi Chemical Corporation | polyoxytetramethylene glycol | 2000 | 37/63 |
| PAE-6 | ω-laurinlactam aminododekanoic acid (product name) manufactured by Ube Industries, Ltd. | polyoxytetramethylene glycol | 2000 | 37/63 |
| PAE-7 | ε-caprolactam | polyoxyethylene glycol PEG1000 (product name) manufactured by DKS Co. Ltd | 1000 | 28/72 |

Next, the stirring was stopped, and the polymer in a melted state was taken in a strand-like form of the polymer takeout port and cut by an underwater cutting method to produce elastomers PAE 1 to 7.

### [Polyolefin-based elastomer (polyolefin-based copolymer)]

Various kinds of polyolefin-based elastomers POE-1 to -11 shown in Table 3 were prepared.

**[Table 3]**

| Polyolefin-based elastomer | Polymer which has α-olefin as a main unit | Copolymer | Ratio of polymer/copolymer (% by mass) |
|---|---|---|---|
| POE-1 | Absence | ethylene-methaciylic acid copolymer Na-type ionomer Himilan 1605 (product name) manufactured by Du Pont-Mitsui Polychemical Co., Ltd | 0/100 |
| POE-2 | Absence | ethylene-methaciylic acid copolymer Na-type ionomer Himilan 1707 (product name) manufactured by Du Pont-Mitsui Polychemical Co., Ltd | 0/100 |
| POE-3 | Absence | ethylene-methaciylic acid-acrylic acid ester copolymer Na-type ionomer Himilan AM7321 (product name) manufactured by Du Pont-Mitsui Polychemical Co., Ltd | 0/100 |
| POE-4 | Absence | ethylene-methacrylic acid copolymer Nucrel N0903HC (product name) manufactured by Du Pont-Mitsui Polychemical Co., Ltd | 0/100 |
| POE-5 | Absence | ethylene-methaciylic acid-acrylic acid ester copolymer Nucrel AN4311 (product name) manufactured by Du Pont-Mitsui Polychemical Co., Ltd | 0/100 |
| POE-6 | Ethylene-butene copolymer[E-Bu] Tafmer A4805(product name) manufactured by Mitsui Chemicals, Inc. | Absence | 100/0 |
| POE-7 | Ethylene-butene copolymer[E-Bu] | ethylene-acrylic acid copolymer [E-AA] PRIMACOR3440 (product name) manufactured by Dow Chemical Japan Limited | 50/50 |
| POE-8 | Ethylene-butene copolymer[E-Bu] | ethylene-glycidyl methacrylate [E-GMC] Bond Fast 2C (product name) manufactured by Sumitomo Chemical Co., Ltd | 50/50 |
| POE-9 | Absence | ethylene-acrylic acid ester-maleic anhydride copolymer Bondine LX4110 (product name) manufactured by Sumitomo Chemical-Atochem Co., Ltd | 0/100 |
| POE-10 | Absence | ethylene-ethyl acrylate copolymer Eva Flex-EEA A-701(product name) manufactured by Du Pont-Mitsui Polychemical Co., Ltd | 0/100 |
| POE-11 | Absence | styrene-ethylene-butadiene-styrene copolymer [S-E-B-S] Tuftec M1913 (product name) manufactured by Asahi Kasei Kougyou Corporation | 0/100 |

### [Process for producing film]

A polyamide-based resin mixture, which had been adjusted in a manner that the water content became 0.09% by mass by a double cone type reduced pressure blender, was supplied to a monoaxial extruder for a core layer and a monoaxial extruder for a skin layer and melted, thereafter layered in a skin layer A/core layer B/skin layer A configuration by a feed block, and extruded in a sheet-like form out of a T die. The sheet was firmly stuck to a cooling roll adjusted to 40°C by an electrostatic adhesion method to give an unstretched sheet of about 200 µm.

The electrostatic adhesion was carried out by applying a DC voltage of 8 kV to electrodes in which needles made of tungsten and having a tip end curvature radius of 0.04 mm, a diameter of 2 mm, and a length of 30 mm were buried at 1 mm pitches.

The obtained unstretched sheet was introduced into a roll type stretching machine, and stretched 1.8 times in the longitudinal direction at 80°C and further stretched 1.8 times at 70°C utilizing the circumferential speed difference of the rolls. Successively, the monoaxially stretched film was continuously led to a tenter type stretching machine, pre-heated in a zone at 110°C; stretched 1.2 times in a zone at 120°C, 1.7 times in a zone at 130°C, and 2.0 times in a zone at 160°C in the transverse direction; subjected to a heat fixation treatment while passing a zone at 180°C and a zone at 210°C; thereafter subjected to a relaxing treatment of 3% in a zone at 210°C and of 2% in a zone at 185°C; cooled while passing a zone at 120°C and a zone at 60°C; led to a film winder; and wound in a roll with both end parts cut off to give a 15 µm-thick biaxially oriented polyamide-based resin film. The configuration ratio between the skin layer A and the core layer B is shown in Table 4.

**[Table 4]**

| | Layer configuration of 3 layers film (µm) | | | Combination ratio of raw material (% by mass) | | | | | | | |
|---|---|---|---|---|---|---|---|---|---|---|---|
| | Skin layer A | Core layer B | Skin layer A | Skin layer | | | | Core layer | | | |
| | | | | Chip A (Note 1) | Chip B (Note 2) | Chip C (Note 3) | Elastomer (Note 4) | Chip A (Note 1) | Chip B (Note 2) | Chip C (Note 3) | Elastomer (Note 4) |
| Examples 1 | 1.5 | 12.0 | 1.5 | 84.0 | 3.0 | 10.0 | PAE-1:3.0 | 84.0 | 3.0 | 10.0 | PAE-1:3.0 |
| Example 2 | 1.5 | 12.0 | 1.5 | 84.0 | 3.0 | 10.0 | PAE-2:3.0 | 84.0 | 3.0 | 10.0 | PAE-2:3.0 |
| Example 3 | 1.5 | 12.0 | 1.5 | 84.0 | 3.0 | 10.0 | PAE-3:3.0 | 84.0 | 3.0 | 10.0 | PAE-3:3.0 |
| Example 4 | 1.5 | 12.0 | 1.5 | 84.0 | 3.0 | 10.0 | PAE-4:3.0 | 84.0 | 3.0 | 10.0 | Pave-4:3.0 |
| Example 5 | 1.5 | 12.0 | 1.5 | 84.0 | 3.0 | 10.0 | PAE-5:3.0 | 84.0 | 3.0 | 10.0 | PAE-5:3.0 |
| Example 6 | 1.5 | 12.0 | 1.5 | 84.0 | 3.0 | 10.0 | PAE-1:3.0 | 86.8 | 0.2 | 10.0 | PAE-1:3.0 |
| Example 7 | 1.5 | 12.0 | 1.5 | 86.0 | 3.0 | 10.0 | PAE-1:1.0 | 86.0 | 3.0 | 10.0 | PAE-1:1.0 |
| Example 8 | 1.5 | 12.0 | 1.5 | 82.0 | 3.0 | 10.0 | PAE-3:5.0 | 82.0 | 3.0 | 10.0 | PAE-3:5.0 |
| Example 9 | 1.5 | 12.0 | 1.5 | 84.0 | 3.0 | 10.0 | POE-1:3.0 | 84.0 | 3.0 | 10.0 | POE-1:3.0 |
| Example 10 | 1.0 | 13.0 | 1.0 | 84.0 | 3.0 | 10.0 | POE-2:3.0 | 84.0 | 3.0 | 10.0 | POE-2:3.0 |
| Example 11 | 1.5 | 12.0 | 1.0 | 84.0 | 3.0 | 10.0 | POE-3:3.0 | 84.0 | 3.0 | 10.0 | POE-3:3.0 |
| Comparative Example 1 | 1.5 | 12.0 | 1.5 | 86.5 | 3.0 | 10.0 | PAE-1:0.5 | 86.5 | 3.0 | 10.0 | PAE-1:0.5 |
| Comparative Example 2 | 1.5 | 12.0 | 1.5 | 78.0 | 3.0 | 10.0 | PAE-1:9.0 | 78.0 | 3.0 | 10.0 | PAE-1:9.0 |
| Comparative Example 3 | 1.5 | 12.0 | 1.5 | 84.0 | 3.0 | 10.0 | PAE-6:3.0 | 84.0 | 3.0 | 10.0 | PAE-6:3.0 |
| Comparative Example 4 | 1.5 | 12.0 | 1.5 | 84.0 | 3.0 | 10.0 | PAE-7:3.0 | 84.0 | 3.0 | 10.0 | PAE-7:3.0 |
| Comparative Example 5 | 1.5 | 12.0 | 1.5 | 84.0 | 3.0 | 10.0 | POE-4:3.0 | 84.0 | 3.0 | 10.0 | POE-4:3.0 |
| Comparative Example 6 | 1.5 | 12.0 | 1.5 | 84.0 | 3.0 | 10.0 | POE-5:3.0 | 84.0 | 3.0 | 10.0 | POE-5:3.0 |
| Comparative Example 7 | 1.5 | 12.0 | 1.5 | 84.0 | 3.0 | 10.0 | POE-6:3.0 | 84.0 | 3.0 | 10.0 | POE-6:3.0 |
| Comparative Example 8 | 1.5 | 12.0 | 1.5 | 84.0 | 3.0 | 10.0 | POE-7:3.0 | 84.0 | 3.0 | 10.0 | POE-7:3.0 |
| Comparative Example 9 | 1.5 | 12.0 | 1.5 | 84.0 | 3.0 | 10.0 | POE-8:3.0 | 84.0 | 3.0 | 10.0 | POE-8:3.0 |
| Comparative Example 10 | 1.5 | 12.0 | 1.5 | 84.0 | 3.0 | 10.0 | POE-9:3.0 | 84.0 | 3.0 | 10.0 | POE-9:3.0 |
| Comparative Example 11 | 1.5 | 12.0 | 1.5 | 84.0 | 3.0 | 10.0 | POE-10:3.0 | 84.0 | 3.0 | 10.0 | POE-10:3.0 |
| Comparative Example 12 | 1.5 | 12.0 | 1.5 | 84.0 | 3.0 | 10.0 | POE-11:3.0 | 84.0 | 3.0 | 10.0 | POE-11:3.0 |

### Examples 1 to 11 and Comparative Examples 1 to 12

Respective biaxially oriented polyamide-based resin films of Examples 1 to 11 and Comparative Examples 1 to 12 were obtained by using the adjusted polyamide resin raw materials of the above-mentioned chips A to C, polyamide-based elastomers shown in Table 2, and polyolefin-based elastomers shown in Table 3, mixing these resin raw materials and elastomers as shown in Table 4, and carrying out the above-mentioned process for producing film.

Using the obtained biaxially stretched polyamide-based resin films, laminate strength, pinhole resistance in Gelbo Flex test, haze, impact strength, coefficient of static friction, and whitening after boiling were evaluated. The evaluation results of Examples 1 to 11 and Comparative Examples 1 to 12 are shown in Table 5.

**[Table 5]**

| | Elastomer | | | | Laminate strength | Gelbo Flex test | Impact strength | Coefficient of static friction | Haze | Whitening after boiling treatment |
|---|---|---|---|---|---|---|---|---|---|---|
| | Polyamide-based elastomer | Polyolefin-based elastomer | Content ratio | dispersion particle size | | | | | | |
| | | | [% by mass] | [µm] | [N/15mm] | average number of defects | [J] | [-] | [%] | |
| Example 1 | PAE-1 | - | 3.0 | 1.8 | 7.3 | 1.3 | 0.96 | 0.55 | 3.6 | Absence |
| Example 2 | PAE-2 | - | 3.0 | 1.6 | 7.4 | 1.6 | 1.00 | 0.53 | 2.8 | Absence |
| Example 3 | PAE-3 | - | 3.0 | 1.4 | 7.3 | 2.0 | 1.03 | 0.58 | 2.1 | Absence |
| Example 4 | PAE-4 | - | 3.0 | 1.3 | 7.6 | 2.1 | 1.04 | 0.57 | 3.2 | Absence |
| Example 5 | PAE-5 | - | 3.0 | 2.0 | 7.0 | 1.5 | 0.97 | 0.59 | 3.5 | Absence |
| Example 6 | PAE-1 | - | 3.0 | 1.8 | 7.5 | 1.2 | 0.95 | 0.60 | 3.5 | Absence |
| Example 7 | PAE-1 | - | 1.0 | 1.7 | 8.0 | 2.9 | 1.15 | 0.51 | 1.8 | Absence |
| Example 8 | PAE-3 | - | 5.0 | 1.8 | 6.8 | 0.8 | 0.94 | 0.59 | 3.8 | Absence |
| Example 9 | - | POE-1 | 3.0 | 1.5 | 7.5 | 2.2 | 1.05 | 0.52 | 2.0 | Absence |
| Example 10 | - | POE-2 | 3.0 | 1.8 | 7.3 | 2.0 | 1.02 | 0.54 | 2.0 | Absence |
| Example 11 | - | POE-3 | 3.0 | 1.9 | 7.0 | 1.5 | 1.06 | 0.62 | 3.0 | Absence |
| Comparative Example 1 | PAE-1 | - | 0.5 | 1.7 | 8.0 | 6.0 | 1.20 | 0.50 | 1.8 | Absence |
| Comparative Example 2 | PAE-1 | - | 9.0 | 1.9 | 6.5 | 0.0 | 0.80 | 0.68 | 6.0 | Absence |
| Comparative Example 3 | PAE-6 | - | 3.0 | 3.5 | 3.0 | 1.1 | 1.04 | 0.57 | 2.7 | Absence |
| Comparative Example 4 | PAE-7 | - | 9.0 | 1.1 | 7.0 | 1.0 | 1.01 | 0.59 | 4.2 | Presence |
| Comparative Example 5 | - | POE-4 | 3.0 | 3.5 | 3.0 | 1.0 | 1.00 | 0.59 | 3.0 | Absence |
| Comparative Example 6 | - | POE-5 | 3.0 | 3.7 | 3.0 | 1.0 | 0.95 | 0.60 | 3.2 | Absence |
| Comparative Example 7 | - | POE-6 | 3.0 | 3.5 | 3.0 | 2.2 | 1.18 | 0.58 | 5.6 | Absence |
| Comparative Example 8 | - | POE-7 | 3.0 | 3.2 | 3.0 | 1.5 | 1.15 | 0.52 | 5.1 | Absence |
| Comparative Example 9 | - | POE-8 | 3.0 | 3.0 | 3.0 | 1.2 | 1.10 | 0.58 | 5.5 | Absence |
| Comparative Example 10 | - | POE-9 | 3.0 | 1.9 | 7.0 | 2.0 | 0.9 | 0.60 | 7.0 | Absence |
| Comparative Example 11 | - | POE-10 | 3.0 | 3.2 | 3.0 | 2.0 | 1.20 | 0.60 | 4.0 | Absence |
| Comparative Examples 12 | - | POE-11 | 3.0 | 3.5 | 3.0 | 1.0 | 1.10 | 0.59 | 5.0 | Absence |

It can be understood from Table 5 that the films of Examples 1 to 11 were excellent in laminate strength, pinhole resistance by the Gelbo Flex test, haze, impact strength, coefficient of static friction, and appearance after the boiling treatment. On the other hand, from Table 5, the films of Comparative Examples 1 to 12 were found to be either failing to simultaneously satisfy laminate strength and pinhole resistance, low in transparency, or causing whitening after the boiling treatment.

### INDUSTRIAL APPLICABILITY

Since the biaxially stretched polyamide-based resin film of the present invention has excellent properties as described above, it is usable not only for small bags for soup but also for pickles bags, large bags for liquids for commercial use, bag-in-boxes, and also for packaging materials with high design properties.

## Claims

1. A biaxially oriented polyamide-based resin film comprising a polyamide-based resin together with a polyolefin-based elastomer and/or a polyamide-based elastomer and satisfying the following conditions (1) to (5):
(1) that the number of Gelbo pinhole defects is not more than 5 when a twist and bend testing is carried out at 1°C 1000 times using a Gelbo Flex tester;
(2) that the impact strength is not less than 0.9 J;
(3) that the total transmission haze value is not more than 5.0%;
(4) that the coefficient of static friction at a temperature of 23°C and a relative humidity of 50% is not more than 0.7; and
(5) that the laminate strength of the laminated film obtained by laminating the biaxially oriented polyamide-based resin film and an unstretched polyethylene-based resin film is not less than 5.0 N/15 mm.

2. The biaxially oriented polyamide-based resin film according to claim 1, wherein the maximum dispersion particle diameter of the polyolefin-based elastomer and/or the polyamide-based elastomer is 0.7 to 2 µm.

3. The biaxially oriented polyamide-based resin film according to claim 1 or 2, wherein the biaxially oriented polyamide-based resin film contains 0.05 to 0.30% by mass of ethylene bis(stearic acid amide) and 0.3 to 0.8% by mass of porous agglomerated silica having a fine pore volume of 1.0 to 1.8 ml/g and an average particle diameter of 2.0 to 7.0 µm.

4. The biaxially oriented polyamide-based resin film according to any one of claims 1 to 3, wherein the biaxially oriented polyamide-based resin film and an unstretched polyolefin-based resin film are laminated to each other and cause no whitening by a hot water treatment.
